# EUROPÄISCHE PATENTSCHRIFT

(11) **EP 0 358 785 B1**
(45) Veröffentlichungstag und Bekanntmachung des Hinweises auf die Patenterteilung: **24.11.1993**
(21) Anmeldenummer: 88114889.4
(22) Anmeldetag: 12.09.1988
(51) Int. Cl.: G06F 11/20, G06F 15/16, B61L 19/06

(54) **Einrichtung zum Betrieb eines redundanten Mehrrechnersystems für die Steuerung eines elektronischen Stellwerkes in der Eisenbahnsignaltechnik**
Device for operating a redundant multiprocessor system for the control of an electronic signal mechanism in the train signal technique
Dispositif pour la mise en fonctionnement d'un système multiprocesseur répondant destiné à la commande d'une cabine à signaux électronique dans la technique des signaux de chemin de fer

(43) Veröffentlichungstag der Anmeldung: 21.03.1990
(73) Patentinhaber: SIEMENS AKTIENGESELLSCHAFT, 80333 München (DE)
(72) Erfinder: Reichelt, Günther, D-3300 Braunschweig (DE); Günther, Rudolf, D-3300 Braunschweig (DE); Geduhn, Norbert, D-3162 Uetze (DE)

(56) Entgegenhaltungen:
- EP-A- 0 132 548
- EP-A- 0 204 449
- EP-A- 0 230 029
- EP-A- 0 272 165
- MINI-MICRO CONFERENCE RECORD, Papier 24/3, Mai 1984, Seiten 1-7, Northeast, New York, US; M. FERNANDEZ: "Implementing fault-tolerance data processing in autonomous space control"
- ELECTRONICS INTERNATIONAL, Band 56, Nr. 2, 27. Januar 1983, Seiten 94-97, New York, US; K.I. COHEN: "Fault-tolerant computers - Multiprocessor architecture tunes in to transaction processing"

## Beschreibung

Die Erfindung bezieht sich auf eine Einrichtung nach dem Oberbegriff des Patentanspruches 1. Eine derartige Einrichtung ist aus der europäischen Patentschrift 0132548 bekannt.

Dort ist ein elektronisches Stellwerk mit mehreren über ein Bussystem zusammenwirkenden Mikrocomputern beschrieben, von denen jeder bestimmte Teilaufgaben des Steuerungsprozesses wahrnimmt. Neben nur einmal vorhandenen Rechnern zur Lösung von übergeordneten Teilaufgaben gibt es sogenannte Bereichsrechner, welche die eigentliche Stellwerkslogik beinhalten und über Stellrechner auf die Prozeßelemente einwirken. Alle Rechner sind signaltechnisch sicher ausgeführt; aus Verfügbarkeitsgründen gibt es zusätzliche Ausfallschutzrechner, die bei Ausfall eines betriebsführenden Rechners dessen Aufgaben übernehmen. Das Umschalten von einem bislang betriebsführenden, ausgefallenen Rechner auf einen betriebsfahigen Ausfallschutzrechner wird von einem der übergeordneten Rechner veranlaßt, der hierzu ständig die Funktionsfähigkeit der einzelnen Rechner überprüft. Dies geschieht mittels Prüftelegrammen zwischen den Rechnern und dem übergeordneten Rechner, nachfolgend als Koordinierungsrechner bezeichnet. Erkennt der Koordinierungsrechner den Ausfall eines betriebsführenden Rechners, so veranlaßt er nach dessen Abschaltung die Übernahme der von diesem Rechner bislang wahrgenommenen Aufgaben durch einen Ausfallschutzrechner, nachfolgend als Reserverechner bezeichnet. Hierzu ist der Reserverechner zuvor mit den für die Betriebsführung erforderlichen Daten aufzurüsten. Dies geschieht durch Abruf von im Koordinierungsrechner abgelegten, unveränderlichen und veränderlichen, das Prozeßgeschehen beschreibenden Daten in den Reserverechner. Über die Art und Weise, wie der Reserverechner in das Mehrrechnersystem integriert wird, ist in der vorgenannten europäischen Patentschrift nichts ausgesagt, insbesondere ist nichts darüber gesagt, ob und in welcher Weise die übrigen Rechner des Rechnersystems auf die Änderung der Rechnerhardware durch Einsatz eines Reserverechners reagieren. Mit diesem neuen Rechner sind Daten auszutauschen; dieser Datenaustausch hat adressenorientiert zu erfolgen und die Adresse des neuen Rechners ist notwendigerweise verschieden von der Adresse des ursprünglichen Rechners. Mindestens von dieser Adressenänderung sind die übrigen Rechner des Rechnersystems vor der Betriebsübernahme durch den bisherigen Reserverechner zu unterrichten und zwar in signaltechnisch sicherer Weise, d.h. durch Mitteilung und Quittierung der neuen Adresse. Bei einem umfangreichen Mehrrechnersystem mit hundert oder mehr Einzelrechnersystemen zur Lösung zugeordneter Teilaufgaben erfordert allein die vorgenannte Adressenmitteilung einen Zeitaufwand, der so groß ist, daß einzelne der Rechnersysteme in der Zwischenzeit den Ausfall des inzwischen abgeschalteten Rechner feststellen und daraus Reaktionen ableiten könnten, die später nicht mehr ohne weiteres rückgängig gemacht werden können. Die Mitteilung einer neuen Adresse an alle betriebsführenden Rechner würde ein weiteres Problem herbeiführen:
Die ebenfalls adreßorientierten rechnerinternen Datenlisten müßten umgestellt werden. Davon wären alle Rechner betroffen. Der programmiertechnische Aufwand würde sich dadurch ebenso erhöhen wie die zeitliche Belastung der Rechner. Dokument EP-A-0 230 029 gibt ein Mehrerechnersystem bekannt, wo jeder Rechner eine physikalische und logische Identität trägt, "heartbeat messages" zyklisch absendet und die Rolle eines ausgefallenen Rechners des Systems übernehmen kann ohne auf einen eventuellen Koordinierungsrechner angewiesen zu sein. Dies wird dadurch erreicht, daß jeder Rechner eine "status"-Tabelle und eine "sparing"-Tabelle beinhaltet, die gleichzeitig durch Empfang von aus den übrigen Rechnern zyklisch abgesendeten "heartbeat messages" aktualisiert werden, sodaß bei Ausfall eines Rechners ein Reserverechner die logische Identität des Ausgefallenen automatisch übernimmt und seine neue Identität an die übrigen Rechner automatisch mittels weiterer "heartbeat messages" bekanntgibt.

Aufgabe der Erfindung ist es, eine Einrichtung nach dem Oberbegriff des Patentanspruches 1 anzugeben, die es gestattet, einen bislang als Reserverechner betriebenen Rechner jederzeit zu einem betriebsführenden Rechner zu machen, wobei die Umschaltphase vom Reservebetrieb auf den betriebsführenden Zustand so kurz wie möglich sein soll. Dabei ist sicherzustellen, daß ein ausgefallener Rechner mindestens bis zu seiner eventuellen späteren Wiederinbetriebnahme nach Behebung der Ausfallursache nicht die Möglichkeit hat, von sich aus anstelle oder zusätzlich zu dem für ihn aktivierten Reserverechner steuernd in das Prozeßgeschehen einzugreifen.

Die Erfindung löst diese Aufgabe durch die kennzeichnenden Merkmale des Patentanspruches 1. Hierdurch wird erreicht, daß die übrigen betriebsführenden Rechner mit dem neuen Rechner unter der Adresse des ausgefallenen Rechners kommunizieren können. Alle zur Lösung einer bestimmten Teilaufgabe einsetzbaren Rechner sind gleichartig ausgebildet, so daß es von der Hardware keine Unterschiede zwischen betriebsführenden Rechnern und Reserverechnern gibt.

Vorteilhafte Aus- und Weiterbildungen der erfindungsgemäßen Einrichtung sind in den Unteransprüchen angegeben.

So sieht der Anspruch 2 für den Koordinierungsrechner eine Zuordnungsliste für Baugruppen- und Betriebsadressen vor. Dies ermöglicht es dem Koordinierungsrechner jederzeit einen ausgefallenen Rechner hardwaremäßig zu lokalisieren und dessen Betriebsadresse an einen geeigneten Reserverechner weiterzugeben.

Die den einzelnen Rechnern fest zugeordneten Baugruppenadressen sollen nach der Lehre des Anspruches 3 bei Betriebsbeginn einem zentralen Speicher entnommen und dann in einem rechnereigenen Adressenregister hinterlegt werden; eine individuelle Vorbehandlung der einzelnen Rechner für die Adressenzuordnung vor Betriebsbeginn erübrigt sich hierdurch.

Die für den Betrieb vorgesehenen Rechner speichern nach der Lehre des Anspruches 4 die ihnen übermittelten Betriebsadressen zunächst nur unter Vorbehalt und übernehmen sie erst nach der vollständigen Aufrüstung des Rechners; hierdurch wird erreicht, daß ein Rechner erst dann unter seiner Betriebsadresse mit den anderen Rechnern des Rechnersystems kommunizieren kann, wenn er mit allen für die Betriebsführung erforderlichen Daten versehen ist.

Die Zuordnung der Betriebsadresse eines ausgefallenen Rechners zu einem Reserverechner ist gemäß Anspruch 5 abhängig gemacht von der vorherigen Abgabe dieser Betriebsadresse durch den ausgefallenen Rechner; dies stellt sicher, daß die unter dieser Betriebsadresse übermittelten Daten nur von dem tatsächlich betriebsführenden Rechner, nicht aber von dem ausgefallenen Rechner verarbeitet werden können.

Wenn gemäß Anspruch 6 die Rechner des zur Prozeßsteuerung verwendeten Rechnerverbundsystemes signaltechnisch sicher ausgebildet sind, ist das sichere Abschalten eines gestörten Rechners gewährleistet; der gestörte Rechner hat dann keinen Zugriff mehr zum Bussystem des Rechnerverbundes.

Während die betriebsführenden Rechner ausschließlich über ihre Betriebsadressen kommunizieren, kommuniziert der Koordinierungsrechner nach der Lehre des Anspruches 7 mit den Reserverechnern unter deren Baugruppenadressen; dies ist erforderlich, um die Reserverechner auf Funktionsfähigkeit zu überprüfen, um sie im Bedarfsfalle aufzurüsten und um ihnen eine Betriebsadresse zuzuweisen.

Für eine möglichst umfassende Funktionskontrolle der Reserverechner im Rahmen eines Prüfbetriebes ist nach der Lehre des Anspruches 8 vorgesehen, auch die Reserverechner mit für die Betriebsführung erforderlichen Daten aufzurüsten. Diese Daten sind die gleichen, die einem tatsächlich betriebsführenden Rechner, für den der Reserverechner den Ausfallschutz übernehmen soll, zu dessen Betrieb übermittelt wurden. Der Reserverechner ist im Gegensatz zu den betriebsführenden Rechnern auch nach seiner Aufrüstung nur unter seiner Baugruppenadresse ansprechbar, so daß er am Steuerungsprozeß selbst noch nicht teilnehmen kann. Durch das Aufrüsten mit Daten eines betriebsführenden Rechners wird erreicht, daß auch solche Funktionen in den Prüfbetrieb einbezogen werden können, die normalerweise erst nach Betriebsübernahme prüfbar sind, beispielsweise die Reaktionen von Ein/Ausgabeschaltmitteln an den Prozeß.

Bei fester Zuordnung eines Reserverechners zu einem betriebsführenden Rechner wird der Reserverechner gemäß Anspruch 9 mit den Daten des zugehörigen betriebsführenden Rechners versorgt. Dies macht eine Betriebsübernahme ohne ein den normalen Datenverkehr beeinträchtigendes Aufrüsten des Reserverechners nach dem Erkennen eines Rechnerausfalles möglich.

Wenn sich die Baugruppenadressen und die Betriebsadressen gemäß Anspruch 10 nur jeweils in der Wertigkeit eines betimmten Bits unterscheiden, ist es für den Koordinierungsrechner einfach, zu unterscheiden zwischen betriebsführenden Rechnern und Reserverechnern, ohne daß es der vollständigen Dekodierung der jeweiligen Adresse bedarf; außerdem kann der Eingaberechner die Betriebsadressen aus den Baugruppenadressen ableiten.

Nach der Lehre des Anspruches 11 soll die Aufnahme des Datenverkehrs zwischen dem Koordinierungsrechner und den übrigen Rechnern des Rechnersystems von der Übermittlung und Quittierung von die Baugruppenadresse des jeweiligen Senderechners bezeichnenden Telegrammen abhängig gemacht sein, wobei die Übermittlung dieser Telegramme unter der Baugruppenadresse des jeweiligen Empfangsrechners erfolgt; der Koordinierungsrechner teilt den Rechnern des Rechnersystems damit mit, unter welcher Adresse er zu erreichen ist.

Zum Erkennen etwaiger Fehlreaktionen der Rechner soll der Koordinierungsrechner gemäß Anspruch 12 Prüftelegramme an die einzelnen Rechner übermitteln und die Reaktionen der Rechner auf diese Prüftelegramme bewerten. Hierdurch soll der Ausfall eines Rechners rechtzeitig erkannt und die Möglichkeit der Reserveaufschaltung herbeigeführt werden.

Für den Fall, daß der Koordinierungsrechner eines in Betrieb befindlichen Mehrrechnersystemes ausfällt, ist nach der Lehre des Anspruches 13 vorgesehen, daß der Koordinierungsrechner bei seiner Wiederinbetriebnahme oder ein Ersatz-Koordinierungsrechner bei seiner Inbetriebnahme die Betriebsadressen der betriebsführenden Rechner nacheinander aufruft, wobei die tatsächlich betriebsführenden Rechner diesen Aufruf mit der ihnen zugeordneten Betriebsadresse und ihrer Baugruppenadresse quittieren und daß der Koordinierungsrechner die einander zugeordneten Adressen in seine Zuordnungsliste einträgt. Damit ist der Koordinierungsrechner über die Zuordnung der einzelnen Betriebsadressen zu den einzelnen Rechnern unterrichtet.

Die Erfindung ist nachstehend anhand von in der Zeichnung dargestellten Ausführungsbeispielen näher erläutert.

Die Zeichnung zeigt:
- in Figur 1: den Aufbau und die Anordnung eines Mehrrechnersystemes für die Steuerung eines elektronischen Stellwerkes,
- in Figur 2: die Zuordnung von Betriebs- und Baugruppenadressen zu einem Rechnersystem,
- in Figur 3: die Zuordnung dieser Adressen bei Übernahme der Funktion eines ausgefallenen Rechners durch einen Reserverechner,
- in Figur 4: die Wiedereingliederung eines zuvor ausgefallenen Rechners in das Rechnersystem,
- in Figur 5: ein Schaubild, anhand dessen die Inbetriebnahme des Mehrrechnersystems erläutert ist,
- in Figur 6: ein Schaubild, anhand dessen die Aufrüstung eines Reserverechners erläutert ist und
- in Figur 7: ein Schaubild, anhand dessen die Aktivierung eines Reserverechners zu einem betriebsführenden Rechner erläutert ist.

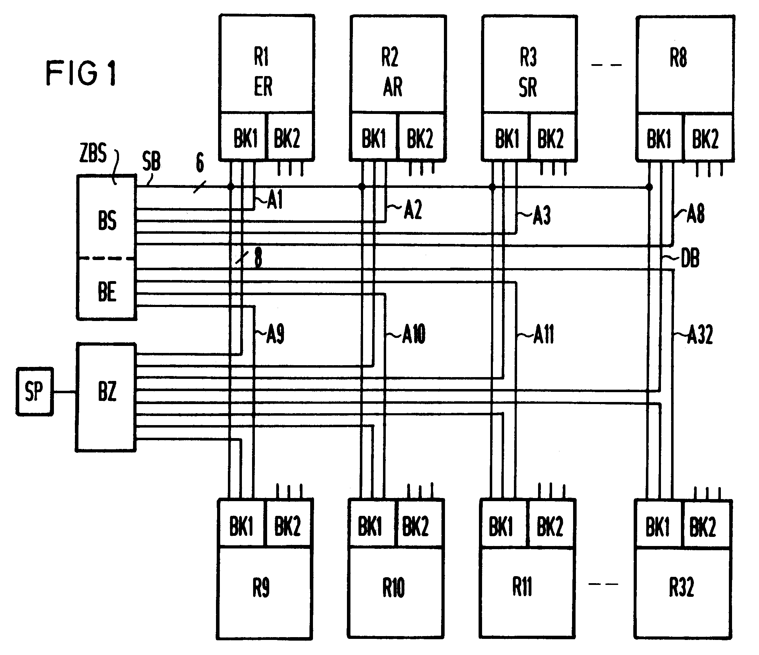

Figur 1 zeigt in ausschnittsweiser Darstellung ein Rechnersystem mit insgesamt 32 Rechnern R1 bis R32; es handelt sich dabei um signaltechnisch sichere Rechner, vorzugsweise Doppelrechner, wie sie unter der Bezeichnung SIMIS bekannt sind. Jeder dieser Rechner ist dazu eingerichtet, eine bestimmte Teilaufgabe des Gesamtprozesses Stellwerkssteuerung zu übernehmen. So soll beispielsweise der Rechner R1 die Aufgabe des aus der E-PS 0132548 bekannten, vorstehend als Koordinierungsrechner bezeichneten Eingaberechners ER, der Rechner R2 die Aufgaben des Anzeigerechners AR und der Rechner R3 die Aufgaben des Schnittstellenrechners SR übernehmen. Die Rechner R8 bis R32 stellen die Bereichs- und Stellrechner dar und beinhalten auch den oder die Reserverechner, die auf noch zu erläuternde Weise in die Prozeßsteuerung einzugliedern sind. Jeder Rechner besitzt zwei Buskoppelbaugruppen BK1 und BK2, von denen jede auf ein gesondertes Bussystem führt. In der Zeichnung ist aus Gründen der Übersichtlichkeit nur ein einziges Bussystem dargestellt. Jedes Bussystem besteht aus einem Datenbus DB mit z.B. 8 Datenleitungen und einem Steuerbus SB mit z.B. 6 Steuerleitungen. Je Rechner ist außerdem eine separate Leitung zur Bussteuerung, die sogenannte Anforderungsleitung A1 bis A32, vorhanden, über die die Rechner bedarfsweise die Erlaubnis zur Busbelegung bei einer zentralen Bussteuerung ZBS anfordern. Diese zentrale Bussteuerung ZBS besteht aus zwei Baugruppen, nämlich der eigentlichen Bussteuerungsbaugruppe BS und einer Buserweiterungsbaugruppe BE. Diese Buserweiterungsbaugruppe enthält die Leitungstreiber und Multiplexer für 28 Anforderungsleitungen, so daß zusammen mit den 8 auf die Bussteuerungsbaugruppe BS geführten Anforderungsleitungen insgesamt 36 Anforderungsleitungen bearbeitet und damit 36 Rechner gesteuert werden können. Für kleinere Bussysteme mit weniger Rechnern reicht die Bussteuerungsbaugruppe BS als Steuerbaustein für die Busverwaltung aus.

Auf den Ablauf der Datenübertragung zwischen den Rechnern soll hier nicht weiter eingegangen werden; dieser Ablauf ist ausführlich in der DE-PS 31 36 355 offenbart.

Die an die Eingänge der Buskoppelbaugruppen BK1 angeschlossenen Datenleitungen des Datenbusses DB sind auf eine Buszentrale BZ geführt, in der einander entsprechenden Datenleitungen miteinander verbunden sind. Diese Buszentrale dient unter anderem dazu, den einzelnen Rechnern bei Betriebsaufnahme eine in einem Speicher SP, z.B. einem Codierfeld, für die einzelnen Rechner hinterlegte Baugruppenadresse zuzuordnen. Die einzelnen Rechner übernehmen die ihnen über die Buszentrale BZ zugewiesene Baugruppenadresse und speichern sie in einem rechnerinternen Adressenregister ab.

Wie bereits angedeutet, arbeiten die Rechner jeweils über zwei voneinander unabhängige Bussysteme zusammen; für den Betrieb dieser Bussysteme sind voneinander unabhängig arbeitende Steuerungen vorgesehen. Im Ordnungsfall arbeiten die beiden Busse parallel. Jedes Telegramm wird über beide Busse übertragen, wobei der jeweils empfangende Rechner die Übereinstimmung der übertragenen Telegramme prüft. Fällt ein Bus aus, kann der verbleibende Bus für eine begrenzte Zeit einkanalig weiterbetrieben werden. Die Sicherheit gegen Verfälschung wird für diese Zeit durch Verwendung doppelt langer, zusätzlich gesicherten Telegramme erhöht wie es in der europäischen Patentanmeldung 0182134 im einzelnen angegeben ist.

Nach der Lehre der vorliegenden Erfindung ist vorgesehen, daß bei allen betriebsführenden Rechnern die dort hinterlegten Baugruppenadressen durch vom Eingaberechner (Koordinierungsrechner) übermittelte sogenannte Betriebsadressen ersetzt werden, unter denen die Rechner untereinander und mit dem Eingaberechner kommunizieren. Der Eingaberechner ist darüber unterrichtet, welcher Rechner unter welcher Betriebsadresse zu erreichen ist und er ist in der Lage, im Falle, daß ein betriebsführender Rechner ausfällt, dessen Betriebsadresse einem Reserverechner zuzuordnen, der dann unter dieser Betriebsadresse in die Prozeßsteuerung eingreift. Für alle anderen betriebsführenden Rechner ist nicht erkennbar, daß ein ursprünglich aktiver Rechner ausgefallen und durch einen Reserverechner ersetzt worden ist.

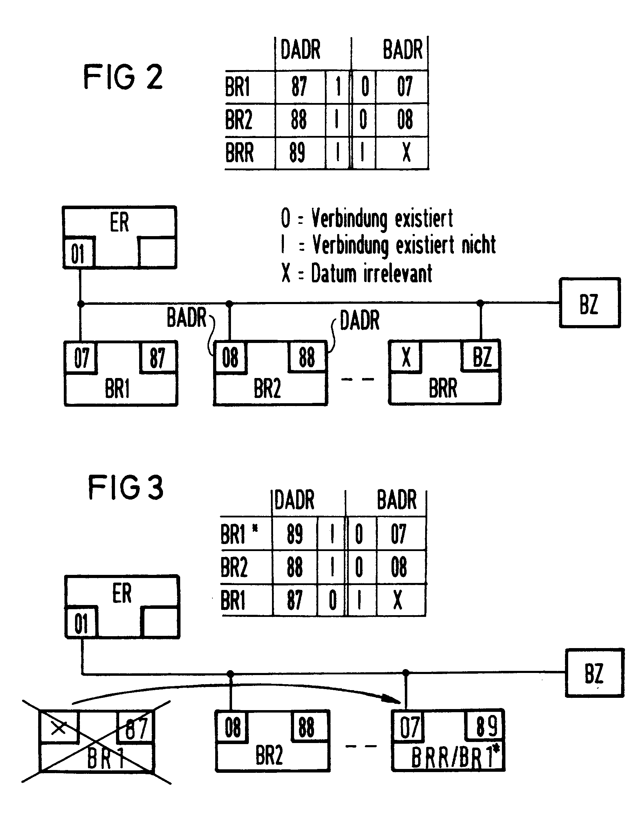

Dieser Vorgang ist anhand der Figuren 2 bis 4 verdeutlicht. Die Figur 2 zeigt den Eingaberechner ER, zwei betriebsführende Bereichsrechner BR1 und BR2 und einen Reserverechner BRR, der bei Ausfall eines der betriebsführenden Bereichsrechner dessen Aufgaben übernehmen soll. Zu Betriebsbeginn haben alle Rechner des Rechnersystemes aus der Buszentrale BZ die für sie jeweils vorgesehene Baugruppenadresse erfragt und in einem rechnereigenen Adressenregister hinterlegt. Diese Baugruppenadressen sind durch Wire-Wrap-Verbindungen auf dem Steckplatz der Buszentrale BZ fest verdrahtet. Sie werden im folgenden zur Unterscheidung von den Betriebsadressen BADR als Drahtadressen DADR bezeichnet; für sie stehen die zweistelligen Ziffern 87 bis 89 in den Rechnerdarstellungen. Der Eingaberechner ER führt die Betriebsadresse "01"; seine Drahtadresse ist nicht angegeben, weil es bei dem dargestellten Ausführungsbeispiel ausschließlich um den Ersatz eines betriebsführenden Bereichsrechners, nicht aber um den Ersatz des Eingaberechners durch einen Reserverechner geht. Bei Betriebsaufnahme hat der Eingaberechner ER allen betriebsführenden Bereichsrechnern BR1 und BR2 eine Betriebsadresse zugewiesen, die in der Zeichnung durch die Ziffern 07 und 08 symbolisiert wird. Diese Betriebsadressen ersetzen die für die betriebsführenden Rechner zuvor geltenden Drahtadressen, d.h. die für den Datenverkehr wirksame Adresse des Bereichsrechners BR1 lautet "07" und die Adresse des Bereichsrechners BR2 "08". Über diese Betriebsadressen liegen die betriebsführenden Bereichsrechner BR1 und BR2 am gemeinsamen Bus. Sie tauschen untereinander und mit dem Eingaberechner Daten aus, wobei als Adresse die jeweils zugeordnete Betriebsadresse verwendet wird. Demgegenüber liegt der Reservebereichsrechner BRR noch über seiner Drahtadresse "89" am Bussystem. Über diese Drahtadresse wird er vom Eingaberechner ER laufend mit Prüfdaten versorgt, die der Funktionsprüfung des Reserverechners dienen. Die betriebsführenden Bereichsrechner werden über ihre Betriebsadressen mit Prüfdaten versorgt. Alle Bereichsrechner einschließlich der Reservebereichsrechner senden auf diese Prüfdaten Rückmeldedaten an den Eingaberechner, der diese Rückmeldedaten mit von ihm erwarteten Rückmeldedaten vergleicht und daraus eine Information über den Betriebszustand des Rechnersystems ableitet.

In einem der Figur 2 beigegebenen Schaubild sind die den dargestellten drei Bereichsrechnern zugeordneten Draht- und Betriebsadressen eingetragen. Für die beiden betriebsführenden Rechner BR1 und BR2 sind dies die Betriebsadressen "07" und "08" und für den Reservebereichsrechner BRR die Drahtadresse "89". Es ist ferner durch einen Strich bzw. eine Null verdeutlicht, unter welcher Adresse der jeweilige Rechner am Datenverkehr teilnimmt. Eine Null bedeutet dabei, daß der Rechner über die zugehörige Adresse erreichbar ist und am Datenverkehr teilnimmt, ein Strich, daß der Rechner übr diese Adresse nicht ansprechbar ist.

Figur 3 illustriert die Vorgänge bei Ausfall eines betriebsführenden Rechners und Übernahme von dessen Funktionen durch einen Reserverechner. Es ist angenommen, daß der Bereichsrechner BR1 aus irgendeinem Grunde ausgefallen ist. Dies wird von dem Eingaberechner ER beim Ausbleiben der erwarteten Meldetelegramme des Bereichsrechners BR1 erkannt. Der Eingaberechner schaltet den ausgefallenen Bereichsrechner BR1 ab bzw. er erkennt, daß sich der ausgefallene Rechner selbst abgeschaltet hat und veranlaßt das Eingliedern des Reserverechners BRR in das Rechnersystem. Der Eingaberechner weist dem bisherigen Reserverechner die Betriebsadresse "07" des ausgefallenen Bereichsrechners BR1 zu, indem er ihn über seine Drahtadresse "89" aufruft und ihm die Betriebsadresse "07" übermittelt. Der bisherige Reserverechner nimmt nach dem Aufrüsten mit den zu seinem Betrieb notwendigen Daten als "neuer" Bereichsrechner BR1* am Datenverkehr teil. Von nun an ist er ausschließlich über seine Betriebsadresse ansprechbar; die ihm zugewiesene Drahtadresse ist durch die Betriebsadresse "07" ersetzt worden. Der ausgefallene Bereichsrechner BR1 kann am Datenverkehr nicht mehr teilnehmen, weil ihm keine Betriebsadresse zugeordnet ist bzw. weil er sich selbst abgeschaltet hat oder abgeschaltet wurde.

Das der Darstellung der Figur 3 beigegebene Schaubild zeigt an, welche der Bereichsrechner betriebsführend sind und welche nicht. Es ist zu erkennen, daß die Bereichsrechner BR2 und BR1* betriebsführend sind. Sie sind über ihre Betriebsadressen ansprechbar; der ausgefallene Bereichsrechner BR1 ist über seine Drahtadresse ansprechbar.

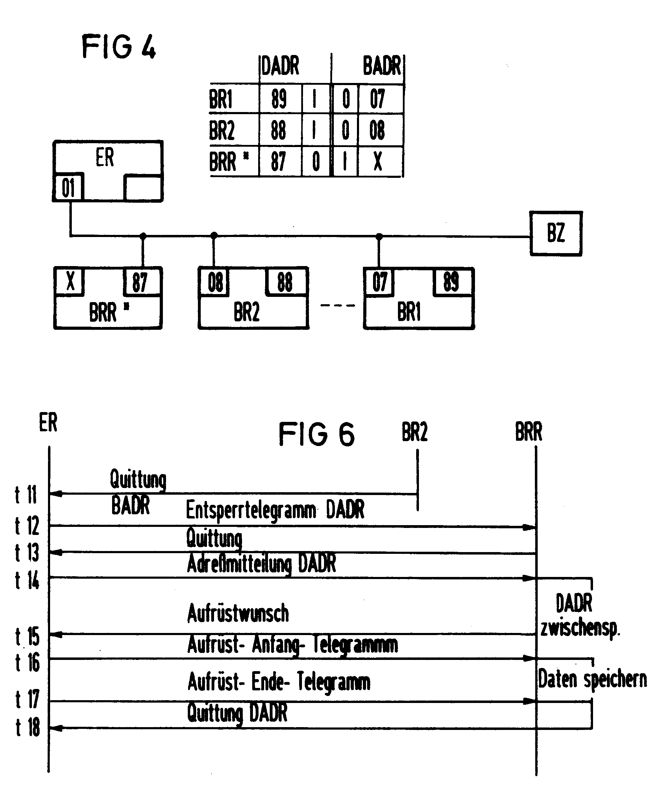

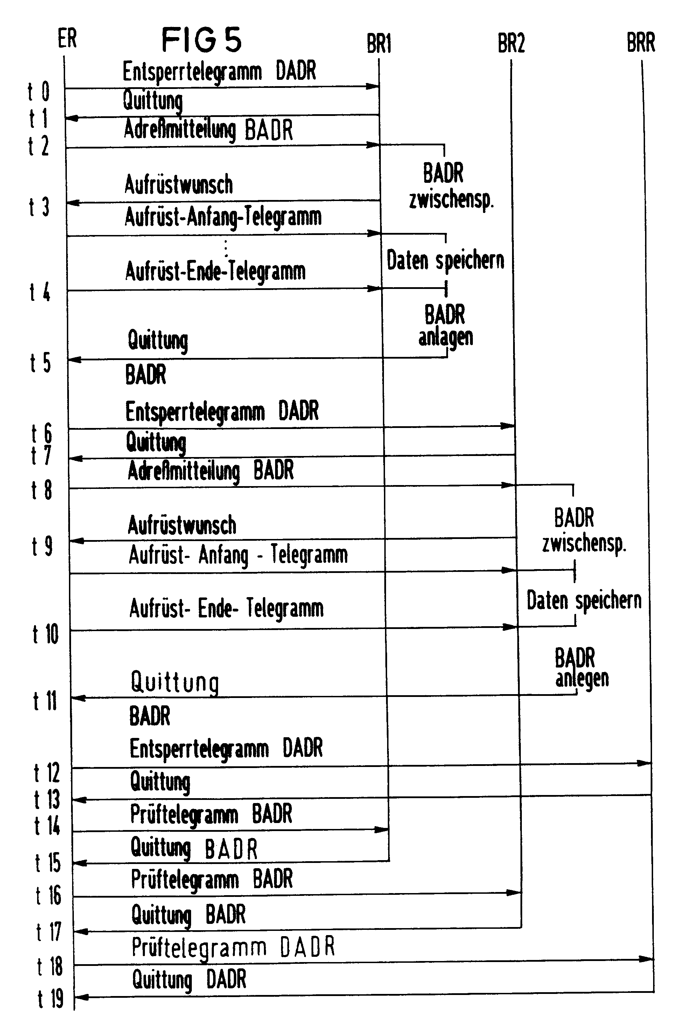

Figur 4 verdeutlicht die Zusammenhänge bei der Wiedereingliederung eines ausgefallenen Rechners nach seiner Instandsetzung. Der ausgefallene Bereichsrechner mit der Drahtadresse "87" ruft bei seiner Inbetriebnahme von der Buszentrale BZ seine Drahtadresse ab und hinterlegt sie in dem rechnereigenen Adressenregister. Mit dieser Adresse meldet er sich beim Eingaberechner ER als wieder betriebsbereit. Der Eingaberechner stuft ihn daraufhin als Reserverechner BRR* ein, versorgt ihn über seine Drahtadresse "87" laufend mit Prüfdaten und prüft über die vom Reserverechner ausgegebenen Meldedaten seine Funktionsfähigkeit. Für den Fall, daß einer der betriebsführenden Rechner BR2 oder BR1 ausfallen sollte, veranlaßt er das Abschalten des ausgefallenen Bereichsrechners und die Übernahme der von diesem bislang ausgeführten Funktionen durch den neuen Reserverechner BRR*. Hierzu wird er dann die Betriebsadresse des ausgefallenen Bereichsrechners an den Reserverechner BRR* übermitteln, der diese Betriebsadresse abgespeichert und nach Aufrüstung mit den für den Betrieb erforderlichen Daten unter dieser Betriebsadresse mit den anderen Rechnern des Rechnersystems kommunizieren kann. Aus dem der Figur 4 beigegebenen Schaubild ist wiederum erkennbar, welcher der Bereichsrechner über welche Adresse ansprechbar sind. Es sind dies für die betriebsführenden Bereichsrechner BR2 und BR1 die Betriebsadressen und für den Reserverechner BRR* die Drahtadresse.

Figur 5 zeigt in einem Schaubild den Funktionsablauf bei der Betriebsaufnahme des Mehrrechnersystems. Dabei ist angenommen, daß die in das Rechnersystem einzugliedernden Rechner, es handelt sich um die Bereichsrechner BR1 und BR2 sowie den Reservebereichsrechner BRR, über ihre Baugruppen- bzw. Drahtadressen unterrichtet sind, sei es, daß ihnen diese Adressen von einer Buszentrale übermittelt wurden, sei es, daß diese Adressen von Anfang an bei den Bereichsrechnern hinterlegt sind. Zu einem Zeitpunkt t₀ ruft der Eingaberechner ER den Bereichsrechner BR1 mit einem sogenannten Entsperrtelegramm auf, das diesen von der Existenz und der Adresse des Eingaberechners unterrichtet und ihn zur Abgabe einer Quittungsmeldung auffordert. Das Entsperrtelegramm wird dem Bereichsrechner BR1 unter dessen Drahtadresse DADR übermittelt. Der Bereichsrechner BR1 quittiert den Empfang des Entsperrtelegrammes; aus der zum Zeitpunkt t₁ einlaufenden Quittungsmeldung erkennt der Eingaberechner, daß die Verbindung zum Bereichsrechner BR1 hergestellt ist. Er prüft daraufhin, ob in seinem Speicher noch verfügbare Betriebsadressen vorhanden sind oder nicht. Dies soll annahmegemäß der Fall sein. Der Eingaberechner übermittelt daraufhin dem Bereichsrechner BR1 unter dessen Drahtadresse eine Betriebsadresse BADR, unter der der Bereichsrechner BR1 nach seiner Aufrüstung am Datenverkehr teilnehmen soll. Der Bereichsrechner BR1 speichert die ihm zugewiesene Betriebsadresse zunächst unter Vorbehalt ab; er ist zu diesem Zeitpunkt noch nicht in der Lage, mit anderen, möglicherweise bereits betriebsführenden Rechnern zu kommunizieren. Auf die Zwischenspeicherung der Betriebsadresse teilt der Bereichsrechner BR1 dem Eingaberechner ER seinen Wunsch nach Aufrüstung mit denjenigen Daten mit, die zur Realisierung der ihm vom Eingaberechner zugewiesenen Teilaufgabe erforderlich sind. Diese Aufrüstdaten werden dem Bereichsrechner BR1 unter dessen Drahtadresse in Form von Telegrammen übermittelt. Diese Telegrammübertragung ist zum Zeitpunkt t₄ beendet. Der Bereichsrechner BR1 speichert die ihm übermittelten Daten ab und quittiert den ordnungsgerechten Empfang der Daten zum Zeitpunkt t₅ mit einer Quittungsmeldung. Außerdem übernimmt der Bereichsrechner BR1 die ihm zugewiesene zwischengespeicherte Betriebsadresse BADR in sein Adressenregister, wobei er die dort bislang abgespeicherte Drahtadresse überschreibt und meldet diese Betriebsadresse an den Eingaberechner. Die Quittungsmeldung ist vorteilhaft mit der Meldung über das Anlegen der Betriebsadresse zu verbinden, d.h. die Quittung erfolgt bereits unter Verwendung der dem Bereichsrechner BR1 zugewiesenen Betriebsadresse. Der Bereichsrechner BR1 ist von diesem Zeitpunkt an in der Lage, am Datenverkehr des Rechnersystems aktiv teilzunehmen.

Zum Zeitpunkt t₆ ruft der Eingaberechner den Bereichsrechner BR2 über dessen Drahtadresse auf. Wird das vom Eingaberechner ausgegebene Entsperrtelegramm vom Bereichsrechner BR2 ordnungsgerecht empfangen, so erfolgt zum Zeitpunkt t₇ die Quittungsmeldung an den Eingaberechner. Der Eingaberechner prüft, ob der Bereichsrechner BR2 an der Prozeßsteuerung zu beteiligen ist und weist ihm für den Fall, daß dies erforderlich ist, zum Zeitpunkt t₈ eine Betriebsadresse zu. Diese Betriebsadresse wird von dem Bereichsrechner BR2 wieder unter Vorbehalt zwischengespeichert und führt zum Zeitpunkt t₉ zur Abgabe eines Telegrammes an den Eingaberechner, das dort den Wunsch nach Aufrüstung des Bereichsrechners BR2 mit den für diesen Bereichsrechner bestimmten Daten signalisiert. Der Eingaberechner übermittelt dann die dem Bereichsrechner BR2 zur Lösung von dessen Teilaufgaben erforderlichen Daten in Form von Telegrammen. Diese Daten werden von dem Bereichsrechner BR2 abgespeichert. Zum Zeitpunkt t₁₀ ist die Übertragung mit Aufrüstdaten beendet. Sind die Daten vom Bereichsrechner BR2 ordnungsgerecht empfangen worden, so quittiert der Bereichsrechner den Empfang der Daten zum Zeitpunkt t₁₁, nachdem er zuvor seine Drahtadresse durch die ihm vom Eingaberechner übermittelte Betriebsadresse ersetzt hat. Auch der Bereichsrechner BR2 ist jetzt in der Lage, mit den übrigen Rechnern des Rechnersystems zu kommunizieren.

Zum Zeitpunkt t₁₂ ruft der Eingaberechner den Reservebereichsrechner BRR auf, indem er ihm über dessen Drahtadresse ein Entsperrtelegramm zusendet. Der Bereichsrechner quittiert den Empfang des Entsperrtelegrammes zum Zeitpunkt t₁₃. Daraufhin prüft der Eingaberechner, ob der Bereichsrechner BRR am Datenverkehr zu beteiligen ist. Dies soll annahmegemäß nicht der Fall sein, weil sämtliche von den Bereichsrechnern zu übernehmenden Teilaufgaben bereits auf die betriebsführenden Bereichsrechner BR1 und BR2 aufgeteilt worden sind und der Bereichsrechner BRR lediglich als Reservebereichsrechner verwendung finden soll. Der Eingaberechner stellt also fest, daß keine Betriebsadresse mehr zu vergeben ist und überträgt folglich auch keine Betriebsadresse an den Reservebereichsrechner BRR. Er ist aber davon unterrichtet, daß die Verbindung zum Bereichsrechner BRR erfolgreich hergestellt werden konnten und bezieht den Bereichsrechner BRR wie auch die übrigen Bereichsrechner in einen Prüfbetrieb zum Feststellen etwaiger Rechnerausfälle ein. Hierzu überträgt der Eingaberechner nacheinander zu den Zeitpunkten t₁₄, t₁₆ und t₁₈ Prüftelegramme an die angeschlossenen Bereichsrechner, wobei die Prüftelegramme für die betriebsführenden Bereichsrechner BR1 und BR2 unter deren Betriebsadressen und die Prüftelegramme an den Reservebereichsrechner BRR unter dessen Drahtadresse abgesetzt werden. Der Eingaberechner prüft die aufgrund der Prüftelegramme von den jeweils angesprochenen Bereichsrechnern abgesetzten und zu den Zeitpunkten t₁₅, t₁₇ bzw. t₁₉ einlaufenden Quittungsmeldungen, ob sie dem von ihm jeweils erwarteten Bitmuster entsprechen und setzt dann den Prüfbetrieb oder, falls erforderlich, den Betrieb zur Prozeßsteuerung fort. Hierbei werden abhängig vom jeweiligen Prozeßgeschehen die einzelnen betriebsführenden Bereichsrechner individuell angesteuert und mit Daten versorgt. Innerhalb vorgegebener Mindestzeitspannen werden dabei die Rechner des Rechnersystemes durch Prüftelegramme auf ordnungsgerechtes Funktionsverhalten überprüft.

Während alle betriebsführenden Rechner durch die Prüftelegramme des Eingaberechners nicht nur hinsichtlich des Rechnerkerns, sondern auch hinsichtlich der Prozeßperipherie überprüft werden können, ist dies bei dem oder den Reserverechnern nicht ohne weiters möglich. Dort wird bisher im allgemeinen nur der Rechnerkern auf ordnungsgerechtes Funktionsverhalten geprüft, weil für diese Rechner noch gar nicht feststeht, auf welche Prozeßperipherie sie einmal einwirken werden. Prüfprozeduren, die sich z.B. auf die Funktionsprüfung der an der Ausgabe von Kommandos und am Empfang und der Bewertung von Meldungen beteiligten Schaltmittel beziehen, können bislang bei Reserverechnern nicht ohne weiteres durchgeführt werden. Um eine derartige umfangreiche Funktionsprüfung auch bei Reserverechnern durchführen zu können, ist nach einer Weiterbildung der Erfindung vorgesehen, auch die Reserverechner aufzurüsten und ihre Reaktionen auf Prüfkommandos zu bewerten. Wie das im einzelnen geschehen soll, ist anhand der Figur 6 erläutert.

Es ist angenommen, daß der zuletzt aufgerüstete Bereichsrechner BR2 zum Zeitpunkt t11 dem Eingaberechner ER den ordnungsgerechten Empfang der ihm übermittelten Daten quittiert und das Anlegen der ihm zugewiesenen Betriebsadresse BADR mitgeteilt hat. Zum Zeitpunkt t12 sendet der Eingaberechner unter der Drahtadresse des Reserverechners BRR ein Entsperrtelegramm an den Reserverechner, das dieser zum Zeitpunkt t13 quittieren soll. Abweichend zum Geschehen gemäß Fig. 5 veranlaßt der Eingaberechner daraufhin die Ausgabe der Anweisung "Adreßmitteilung", die den Reserverechner zur Anforderung von Aufrüstdaten veranlassen soll. Die Anweisung "Adreßmitteilung" wird dem Bereichsrechner unter dessen Drahtadresse übermittelt; sie beinhaltet auch keine Betriebsadresse wie bei den für den Betrieb vorgesehenen Bereichsrechnern BR1 und BR2, sondern die dem Reserverechner bereits bekannte Drahtadresse. Der Reserverechner fordert aufgrund der ihm übermittelten Anweisung "Adreßmitteilung" zum Zeitpunkt t15 die Übermittlung von Aufrüstdaten an. Der Eingaberechner übermittelt dem Reserverechner daraufhin Aufrüstdaten, die tatsächlich einem derjenigen betriebsführenden Rechner zugeordnet sind, für den der Reserverechner Ausfallschutz übernehmen soll. Welcher der betriebsführenden Rechner das ist, ist prinzipiell egal. Das Aufrüsten des Reserverechners mit den für den Betrieb eines anderen Bereichsrechners erforderlichen Daten dauert vom Zeitpunkt t16 bzw. zum Zeitpunkt t17. Zum Zeitpunkt t18 quittiert der Reserverechner den ordnungsgerechten Empfang der Aufrüstdaten und teilt dem Eingaberechner mit, daß er nach wie vor über seine Drahtadresse DADR ansprechbar ist. Der Reserverechner ist fortan vom Eingaberechner wie jeder betriebsführende Rechner auf ordnungsgerechtes Funktionsverhalten überprüfbar, wobei in die Funktionsprüfung auch das Funktionsverhalten der Prozeßperipherie einbezogen ist. Wie die Prozeßperipherie im einzelnen auf ordnungsgerechtes Funktionsverhalten überprüfbar ist, ist z.B. in der DE-PS 32 34 787 angegeben. Für den Fall, daß der Reserverechner einen ausgefallenen Rechner ersetzen soll, ist er vor Übernahme von dessen Aufgaben mit den für die Lösung dieser Aufgaben erforderlichen Daten aufzurüsten, es sei denn, bei dem ausgefallenen Rechner handelt es sich zufällig um den Rechner, dessen Daten er für seine eigene Funktionsprüfung bereits eingelesen hatte.

Im allgemeinen ist es so, daß ein Reserverechner als Ausfallschutz für mehrere betriebsführende Rechner verwendet ist, daß also keine feste Zuordnung zwischen betriebsführendem Rechner und Reserverechner besteht. Anders ist dies bei den sogenannten Stellrechnern, über die die Elemente der Außenanlage angesteuert werden. Wird hier Redundanz gefordert, so sind die Stellrechner zu verdoppeln, wobei jeweils beide Stellrechner, sowohl der jeweils betriebsführende als auch der zugehörige Reservestellrechner, Zugriff auf die zu steuernden Elemente haben. Bei einer derartigen Konfiguration ist es von Vorteil, die Reservestellrechner vorab mit den Daten des jeweils zugehörigen betriebsführenden Rechners aufzurüsten. Die Reserverechner können so auf einwandfreies Funktionsverhalten überprüft werden und sie können im Fehlerfall ohne ein zusätzliches Aufrüsten sofort die Aufgaben des ausgefallenen Rechners übernehmen.

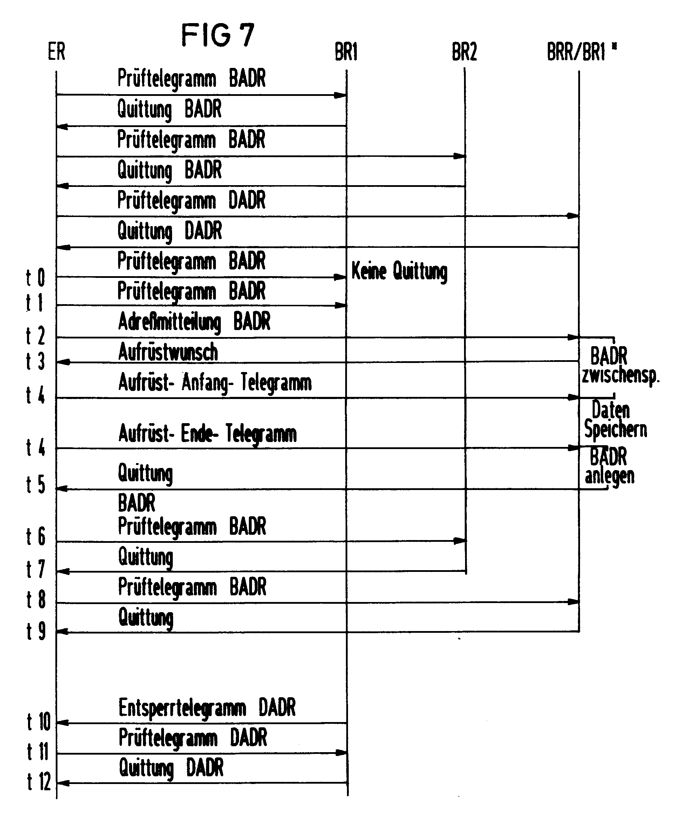

Wie das Einbeziehen eines Reserverechners in ein Rechnersystem bei Ausfall eines bislang betriebsführenden Rechners vor sich geht, ist nachfolgend anhand der Figur 7 erläutert. Dabei ist angenommen, daß der in das Rechnersystem einzugliedernde Reserverechner noch nicht mit den Daten des ausgefallenen Rechners geladen ist. Der Eingaberechner befindet sich in einem Prüfmodus, in dem er den mit ihm zusammenwirkenden Bereichsrechnern einschließlich der Reservebereichsrechner Prüftelegramme übermittelt und die von ihnen rückübertragenen Quittungsmeldungen analysiert.

Zu einem Zeitpunkt t₀ soll der Eingaberechner dem Bereichsrechner BR1 ein Prüftelegramm übermitteln, auf das die Quittungsmeldung ausbleibt. Der Eingaberechner wiederholt daraufhin zum Zeitpunkt t₁ das Prüftelegramm für den Bereichsrechner BR1, woraufhin erneut die Quittung ausbleibt, weil der Bereichsrechner BR1 annahmegemäß ausgefallen sein soll. Der Eingaberechner veranlaßt bzw. erkennt das Abschalten des ausgefallenen Bereichsrechners, ruft zum Zeitpunkt t₂ einen von ihm in einem vorherigen Prüfzyklus als ordnungsgerecht arbeitend erkannten Reservebereichsrechner BRR über dessen Drahtadresse auf und übermittelt ihm die Betriebsadresse des ausgefallenen Bereichsrechners BR1. Der bisherige Reservebereichsrechner BRR übernimmt die ihm übermittelte Betriebsadresse unter Vorbehalt und teilt dem Eingaberechner zum Zeitpunkt t3 den Wunsch nach Aufrüstung mit den zur Betriebsführung notwendigen Daten mit. Der Eingaberechner veranlaßt daraufhin die Ausgabe der Aufrüstdaten an den bisherigen Reservebereichsrechner, der diese Daten abspeichert. Zum Zeitpunkt t₄ ist die Übertragung der Aufrüstdaten beendet und der bisherige Reservebereichsrechner BRR quittiert dem Eingaberechner zum Zeitpunkt t₅ den ordnungsgerechten Empfang der Daten und die Übernahme der ihm zugewiesenen Betriebsadresse. Der bisherige Bereichsrechner nimmt nun als neuer Bereichsrechner BR1* die Aufgaben des ausgefallenen Rechners wahr, ohne daß die übrigen Rechner des Rechnersystems vom Ausfall eines Rechners und dem Ersatz dieses Rechners durch einen anderen Rechner irgendetwas merken. Sie kommunizieren auch mit dem "neuen" Bereichsrechner BR1 unter der gleichen Betriebsadresse, unter der sie zuvor mit dem ursprünglichen Bereichsrechner BR1 zusammengearbeitet haben.

Nach dem Aufrüsten des Reservebereichsrechners setzt der Eingaberechner den Prüfbetrieb fort. Er ruft zum Zeitpunkt t₆ den betriebsführenden Bereichsrechner BR2 auf und prüft das zum Zeitpunkt t7 einlaufende Quittungstelegramm auf etwaige Abweichungen im erwarteten Bitmuster. Zum Zeitpunkt t₈ ruft der Eingaberechner den jetzt betriebsführenden Reserverechner BR1* auf, diesmal allerdings unter dessen Betriebsadresse, und prüft, ob das zum Zeitpunkt t₉ einlaufende Quittungstelegramm dem erwarteten Muster entspricht oder nicht.

Zu einem sehr viel späteren Zeitpunkt t₁₀ soll der ausgefallene Bereichsrechner BR1 wieder hergestellt sein, d.h. er ist in der Zwischenzeit entweder repariert worden oder der Grund für den Ausfall des Rechners, beispielsweise eine kurzzeitige Unterbrechung der Stromversorgung, existiert nicht mehr. Der Bereichsrechner BR1 meldet sich dann bei dem Eingaberechner unter seiner Drahtadresse, die er zuvor aus der Buszentrale erfragt hat und unterrichtet den Eingaberechner davon, daß er bereit ist zur Übernahme ihm zuzuweisender Aufgaben. Der Eingaberechner stellt fest, daß keine Betriebsadressen mehr verfügbar sind, daß also alle Teilaufgaben des Steuerungsprozesses von anderen Bereichsrechnern wahrgenommen werden und überträgt dem ehemals betriebsführenden Bereichsrechner BR1 zum Zeitpunkt t₁₁ ein Prüftelegramm unter dessen Drahtadresse zur Überprüfung der Funktionsfähigkeit des Rechners. Ergibt die zum Zeitpunkt t₁₂ einlaufende Quittungsmeldung des Rechners, daß der Rechner funktionsfähig ist, so wird der Rechner unter seiner Drahtadresse als verfügbarer Reserverechner in das Rechnersystem eingegliedert, d.h. bei Ausfall eines der augenblicklich betriebsführenden Bereichsrechners greift der Eingaberechner auf den neuen Reserverechner zurück. Zum Durchführen umfangreicherer Prüfprozeduren kann der Eingaberechner den Reserverechner BR1 auch mit den Daten eines betriebsführenden Rechners aufrüsten wie es anhand der Fig. 6 erläutert wurde.

Fällt der Eingaberechner ER selbst aus, beispielsweise infolge eines kurzzeitigen Ausfalls der Stromversorgung, so muß er bei seinem Wiederanlaufen Kontakt mit den übrigen Rechnern des Rechnersystems aufnehmen, um festzustellen, welche Rechner betriebsführend und welche nicht betriebsführend sind. Dies geschieht in vorteilhafter Weise dadurch, daß der Eingaberechner nacheinander sämtliche Betriebsadressen ausgibt und dabei auf Rückmeldungen der betriebsführenden Rechner wartet, die ihm in einer Zuordnungsmitteilung neben der jeweiligen Betriebsadresse auch die ihnen fest zugeordnete Drahtadresse mitteilen. Der Eingaberechner schreibt diese Adressen in seine Zuordnungsliste ein und ist damit unterrichtet über die aktiv am Datenverkehr beteiligten betriebsführenden Rechner und die ihnen zugeordneten Betriebsadressen. Der gleiche Ablauf ergibt sich bei einem bleibenden Ausfall des Eingaberechners und Übernahme von dessen Aufgaben durch einen Reserve-Eingaberechner.

Um die betriebsführenden Rechner ermitteln zu können, ist es notwendig, daß der Eingaberechner über die vergebenen Betriebsadressen unterrichtet ist. Wenn diese Betriebsadressen nicht von vornherein unverlierbar abgespeichert sind, so lassen sich diese Betriebsadressen im Eingaberechner dann leicht aus den am Bus abgreifbaren Drahtadressen ableiten, wenn sich die Betriebsadressen nur durch beispielsweise ein Bit an einer vorgegebenen Bitstelle von den Drahtadressen unterscheiden. Für das Generieren der Zuordnungsmitteilungen müssen die betriebsführenden Rechner neben den ihnen zugeordneten Betriebsadressen auch Kenntnis über ihre Drahtadressen haben. Dies kann durch Auslesen eines rechnerinternen Registers oder aber durch Abruf der Drahtadressen aus der Buszentrale und Übermittlung an den Eingaberechner geschehen.

Was vorstehend für den Ersatz eines ausgefallenen Bereichsrechners ausgeführt wurde, gilt sinngemäß auch für alle anderen Rechner, für die Redundanzen vorgesehen sind. Auch hier wird die Betriebsadresse eines ausgefallenen Rechners einem für dessen Funktion geeigneten Reserverechner zugewiesen, der die Aufgaben des ausgefallenen Rechners unter dessen ehemaliger Betriebsadresse ausführt. Während dabei für den Eingaberechner wegen der in ihm hinterlegten Aufrüstdaten für die übrigen Rechner ein gesonderter Reserverechner zur Verfügung zu stellen ist, auf den im Störungsfall umgeschaltet werden kann, kann es ausreichen, für die übrigen übergeordneten Rechner nur einen gemeinsamen Reserverechner vorzusehen, der bei Ausfall eines der übergeordneten Rechner vom jeweils aktiven Eingaberechner aufgerüstet wird und dann die Aufgaben des ausgefallenen Rechners übernimmt. Es ist auch denkbar, besonders exponierten Rechnern nicht nur einen, sondern zwei oder noch mehr Reserverechner fest zuzuordnen, um im Störungsfall die Funktionen des ausgefallenen Rechners weiterzuführen.

## Patentansprüche

1. Einrichtung zum Betrieb eines redundanten Mehrrechnersystems für die Steuerung eines elektronischen Stellwerkes in der Eisenbahnsignaltechnik, bei dem die einzelnen Rechner Teilaufgaben des Steuerungsprozesses lösen und für mehrere dieser Rechner mindestens ein Reserverechner vorgesehen ist, der im Falle des Ausfalles eines der Rechner dessen Teilaufgaben übernehmen soll, und bei dem ein Koordinierungsrechner das Umschalten von einem bislang betriebsführenden, ausgefallenen Rechner auf einen betriebsfähigen Reserverechner veranlaßt, nachdem dieser mit den Daten des ausgefallenen Rechners aufgerüstet wurde, **dadurch gekennzeichnet,**
daß im Koordinierungsrechner (ER) eine der Anzahl der zu lösenden Teilaufgaben entsprechende Zahl von Adressen hinterlegt ist,
daß der Koordinierungsrechner jede bei ihm hinterlegte Adresse als sogenannte Betriebsadresse (BADR) jeweils einem anderen Rechner (BR1, BR2) zuordnet und diesem die ihm zugeordnete Betriebsadresse mitteilt, indem er ihn über eine dem Rechner (BR1, BR2) fest zugeordnete Baugruppenadresse (DADR) anspricht,
daß der Datenverkehr zwischen den betriebsführenden Rechnern (BR1, BR2) untereinander und mit dem Koordinierungsrechner (ER) ausschließlich über die Betriebsadressen (BADR) erfolgt, daß der Koordinierungsrechner (ER) bei Ausfall eines der betriebsführenden Rechner (BR1) die bislang diesem zugeordnete Betriebsadresse (BADR) einem Reserverechner (BRR) zuordnet, der die Teilaufgabe des ausgefallenen Rechners (BR1) übernehmen kann und diesem die Betriebsadresse (BADR) mitteilt, indem er ihn über seine Baugruppenadresse (DADR) anspricht
und daß dieser Rechner (BRR) dann unter der zuvor dem ausgefallenen Rechner (BR1) zugeordneten Betriebsadresse (BADR) am Datenverkehr teilnimmt.

2. Einrichtung nach Anspruch 1, **dadurch gekennzeichnet,** daß der Koordinierungsrechner (ER) Speicher für die Baugruppenadressen (DADR) sämtlicher Rechner (BR1, BR2, BRR) einschließlich der Reserverechner sowie die zu vergebenden Betriebsadressen (BADR) aufweist und daß der Koordinierungsrechner eine Zuordnungsliste führt für die den Rechnern zugeordneten Baugruppen und Betriebsadressen.

3. Einrichtung nach Anspruch 1, **dadurch gekennzeichnet,** daß die Rechner (BR1, BR2, BRR) zu Betriebsbeginn ihre jeweilige Baugruppenadresse (DADR) aus einem zentralen Speicher (SP) abrufen und in rechnereigenen Adressenregistern hinterlegen.

4. Einrichtung nach Anspruch 1, daß der Koordinierungsrechner (ER) die für die Betriebsführung vorgesehenen Rechner (BR1, BR2) in einer dem Betrieb vorausgehenden Aufrüstphase mit den für den Betrieb erforderlichen Daten versorgt, wobei er ihnen auch die ihnen jeweils zugewiesene Betriebsadresse (BADR) mitteilt und daß die Rechner (BR1, BR2) die ihnen vom Koordinierungsrechner (ER) jeweils übermittelte Betriebsadresse (BADR) zunächst zwischenspeichern und erst nach vollständiger Aufrüstung der Rechner für die Adressendecodierung bereitstellen.

5. Einrichtung nach Anspruch 1, **dadurch gekennzeichnet,** daß die Zuordnung der Betriebsadresse eines ausgefallenen Rechners (BR1) zu einem Reserverechner (BRR) abhängig gemacht ist von der vorherigen Abgabe dieser Betriebsadresse durch den ausgefallenen Rechner (BR1) an den Koordinierungsrechner (ER) oder von der Abtrennung oder Abschaltung des ausgefallenen Rechners (BR1).

6. Einrichtung nach Anspruch 5, **dadurch gekennzeichnet,** daß die Rechner des Mehrrechnersystems signaltechnisch sicher ausgeführt sind und sich im Störungsfall signaltechnisch sicher abschalten.

7. Einrichtung nach Anspruch 1, **dadurch gekennzeichnet,** daß der Koordinierungsrechner (ER) mit den nicht mit einer Betriebsadresse (BADR) belegten Reserverechnern (BRR) unter deren Baugruppenadresse (DADR) kommuniziert.

8. Einrichtung nach Anspruch 7, **dadurch gekenn**zeichnet, daß der Koordinierungsrechner (ER) die für die Betriebsführung zunächst nicht vorgesehenen Reserverechner (BRR) in einer dem Betrieb vorangehenden Aufrüstphase mit für den Betrieb eines beliebigen betriebsführenden Rechners erforderlichen Daten aufrüstet.

9. Einrichtung nach Anspruch 8, **dadurch gekennzeichnet,** daß einem betriebsführenden Rechner mindestens ein Reserverechner fest zugeordnet ist und daß der Eingaberechner die Reserverechner mit den Daten des jeweils zugehörigen betriebsführenden Rechners aufrüstet.

10. Einrichtung nach Anspruch 1, **dadurch gekennzeichnet,** daß die Baugruppenadressen (DADR) und die Betriebsadressen (BADR) durch gleichlange Bytes dargestellt sind und daß die Baugruppenadressenbytes an einer vorgegebenen Bitstelle ein Bit der einen Wertigkeit und die Betriebsadressenbytes dort ein Bit der anderen Wertigkeit aufweisen.

11. Einrichtung nach Anspruch 1, **dadurch gekennzeichnet,** daß die Aufnahme des Datenverkehrs zwischen dem Koordinierungsrechner (ER) und den übrigen Rechnern (BR1, BR2, BRR) des Rechnersystemes einschließlich der Reserverechner von der Übermittlung und Quittierung von die Baugruppenadresse (DADR) des jeweiligen Senderechners (ER) bezeichnenden Telegrammen abhängig gemacht ist und daß die Übermittlung dieser Telegramme unter der Baugruppenadresse (DADR) der jeweiligen Empfangsrechner (BR1, BR2, BRR) erfolgt.

12. Einrichtung nach Anspruch 7, 8 oder 9, **dadurch gekennzeichnet,** daß der Koordinierungsrechner (ER) den Rechnern (BR1, BR2, BRR) einschließlich der Reserverechner Prüftelegramme übermittelt zum Erkennen etwaiger Fehlreaktionen dieser Rechner.

13. Einrichtung nach Anspruch 1 oder 10, **dadurch gekennzeichnet,** daß der Koordinierungsrechner (ER) nach einem vorübergehenden Ausfall die betriebsführenden Rechner (BR1, BR2) über die Betriebsadressen (BADR) aufruft, daß die betriebsführenden Rechner (BR1, BR2) diesen Aufruf mit einer die ihnen jeweils zugeordnete Betriebsadresse (BADR) und ihre Baugruppenadresse (DADR) beinhaltenden Zuordnungsmitteilung quittieren und daß der Koordinierungsrechner (ER) die Zuordnungsmitteilungen in die Zuordnungsliste einträgt.

## Claims

1. Device for operating a multi-computer system with redundancy for the control of an electronic signal box in railway signalling technology, in which the individual computers achieve partial tasks of the control process and for several of these computers there is provided at least one back-up computer, which in the case of the break-down of one of the computers is to take over the partial tasks thereof, and in which a coordination computer causes the change-over from a broken-down computer, which hitherto was an operation-control computer, to an operational back-up computer after the latter has been upgraded with the data of the broken-down computer, characterised in that a number of addresses corresponding to the quantity of partial tasks to be achieved is stored in the coordination computer (ER), in that the coordination computer assigns each address stored in it as a so-called operational address (BADR) to, respectively, another computer (BR1, BR2) and informs the latter of the operational address assigned to it by talking to it by way of an assembly address (DADR) fixedly assigned to the computer (BR1, BR2), in that the data traffic between the operation-control computers (BR1, BR2) one with the other and with the coordination computer (ER) is effected exclusively by way of the operational addresses (BADR), in that the coordination computer (ER) in the case of break-down of one of the operation-control computers (BR1) assigns the operational address (BADR) previously assigned to the latter to a back-up computer (BRR) which can take over the partial task of the broken-down computer (BR1) and informs this computer of the operational address (BADR) by talking to it by way of its assembly address (DADR), and in that this computer (BRR) then takes part in the data traffic under the operational address (BADR) previously assigned to the broken-down computer (BR1).

2. Device according to claim 1, characterised in that the coordination computer (ER) has memories for the assembly addresses (DADR) of all the computers (BR1, BR2, BRR) including the back-up computers and also the operational addresses (BADR) to be allocated and in that the coordination computer runs a coordination list for the assemblies and operational addresses assigned to the computers.

3. Device according to claim 1, characterised in that the computers (BR1, BR2, BRR) at the beginning of the operation retrieve their respective assembly address (DADR) from a central memory (SP) and store it in address registers peculiar to the respective computer.

4. Device according to claim 1, [characterised] in that the coordination computer (ER) supplies the computers (BR1, BR2), provided for the operation-control, with the data necessary for the operation in an upgrading phase which precedes the operation, in which case it informs them as well of the operational address (BADR) respectively assigned to them, and in that the computers (BR1, BR2) in the first instance temporarily store the operational address (BADR) respectively communicated to them from the coordination computer (ER) and only after complete upgrading of the computers make it available for the address-decoding.

5. Device according to claim 1, characterised in that the assignment of the operational address of a broken-down computer (BR1) to a back-up computer (BRR) is made dependent upon the previous delivery of this operational address by the broken-down computer (BR1) to the coordination computer (ER) or upon the disconnection or shutdown of the broken-down computer (BR1).

6. Device according to claim 5, characterised in that the computers of the multi-computer system are realized in a reliable manner in terms of signalling techniques and are shut down in a reliable manner in terms of signalling techniques in the case of a disturbance.

7. Device according to claim 1, characterised in that the coordination computer (ER) communicates with the back-up computers (BRR) which are not occupied with an operational address (BADR) using the assembly address (DADR) of said back-up computers.

8. Device according to claim 7, characterised in that the coordination computer (ER) upgrades the back-up computers (BRR), which in the first instance are not provided for the operation-control, with data required for the operation of any operation-control computer in an upgrading phase which precedes the operation.

9. Device according to claim 8, characterised in that at least one back-up computer is fixedly assigned to an operation-control computer and in that the input computer upgrades the back-up computers with the data of the respectively associated operation-control computer.

10. Device according to claim 1, characterised in that the assembly addresses (DADR) and the operational addresses (BADR) are represented by bytes of equal length and in that the assembly address bytes at a given bit position have a bit of the one significance and the operational address bytes there have a bit of the other significance.

11. Device according to claim 1, characterised in that the take-up of the data traffic between the coordination computer (ER) and the other computers (BR1, BR2, BRR) of the computer system including the back-up computers is made dependent upon the communication and acknowledgement of messages denoting the assembly address (DADR) of the respective send computer (ER) and in that the communication of these messages is effected under the assembly address (DADR) of the respective receive computers (BR1, BR2, BRR).

12. Device according to claim 4, 7, 8 or 9, characterised in that the coordination computer (ER) communicates to the computers (BR1, BR2, BRR), including the back-up computers, test messages for the purpose of recognizing possible error reactions of these computers.

13. Device according to claim 1 or 10, characterised in that after a temporary break-down the coordination computer (ER) calls up the operation-control computers (BR1, BR2) by way of the operational addresses (BADR), in that the operation-control computers (BR1, BR2) acknowledge this call-up with an assignment report containing the operational address (BADR), respectively assigned to them, and their assembly address (DADR) and in that the coordination computer (ER) inputs the assignment reports into the assignment list.

## Revendications

1. Dispositif pour faire fonctionner un système redondant à calculateurs multiples pour la commande d'un poste de commande électronique dans la technique de la signalisation ferroviaire, et dans lequel les différents calculateurs résolvent des tâches partielles du processus de commande et, pour plusieurs de ces calculateurs, il est prévu au moins un calculateur de réserve, qui, dans le cas de la défaillance de l'un des calculateurs, doit assumer les tâches partielles de ce calculateur, et dans lequel un calculateur de coordination déclenche la commutation depuis un calculateur défaillant, qui assumait jusqu'alors le fonctionnement, sur un calculateur de réserve apte à fonctionner, après que ce dernier a reçu les données du calculateur défaillant, caractérisé par le fait
qu'un nombre d'adresses, qui correspond au nombre des tâches partielles à exécuter, est mémorisé dans le calculateur de coordination (ER),
que le calculateur de coordination associe chaque adresse, qui est mémorisée en lui, en tant qu'adresse dite de fonctionnement (BADR), respectivement à un autre calculateur (BA1, BA2) et communique à ce calculateur l'adresse de fonctionnement, qui lui est associée, par le fait qu'il appelle ce calculateur par l'intermédiaire d'une adresse de module (DADR) associée de façon fixe au calculateur (BR1,BR2),
que le trafic des données entre les calculateurs (BR1,BR2) assumant le fonctionnement et avec le calculateur de coordination (ER) s'effectue exclusivement par l'intermédiaire des adresses de service (BADR),
que dans le cas de la défaillance de l'un des calculateurs (BR1) assumant le fonctionnement, le calculateur de coordination (ER) associe l'adresse de service (BADR), jusqu'alors associée à ce calculateur (BR1), à un calculateur de réserve (BRR), qui peut assumer la tâche partielle du calculateur défaillant (BR1) et communique à ce dernier l'adresse de service (BADR), par le fait qu'il l'appelle par l'intermédiaire d'une adresse de module (DADR) associée de façon fixe au calculateur (BR1,BR2),
que le trafic des données entre les calculateurs (BR1,BR2) assumant le fonctionnement et le calculateur de coordination (ER) s'effectue exclusivement par l'intermédiaire des adresses de service (BADR),
que dans le cas de la défaillance d'un calculateur (BR1) assumant le fonctionnement, le calculateur de coordination (ER) associe l'adresse de service (BADR) associée jusqu'alors au calculateur (BR1) à un calculateur de réserve (BRR), qui peut assumer la tâche partielle du calculateur défaillant (BR1) et communique à ce dernier l'adresse de service (BADR), par le fait qu'il l'appelle par l'intermédiaire de son adresse de module (DADR), et
que ce calculateur (BR1) participe alors au trafic des données, avec l'adresse de service (BADR) associée au préalable au calculateur défaillant (BR1).

2. Dispositif suivant la revendication 1, caractérisé par le fait que le calculateur de coordination (ER) comporte des mémoires pour les adresses de modules (DADR) pour les calculateurs (BR1,BR2,BRR), y compris le calculateur de réserve ainsi que les adresses de service (BADR) devant être délivrées, et que le calculateur de coordination établit une liste d'associations pour les modules et adresses de service, qui sont associés aux calculateurs.

3. Dispositif suivant la revendication 1, caractérisé par le fait que les calculateurs (BR1,BR2,BRR) appellent leur adresse respective de module (DADR) à partir d'une mémoire centrale (SP) et la mémorisent dans des registres d'adresses, qui leur sont propres.

4. Dispositif suivant la revendication 1, caractérisé par le fait que le calculateur de coordination (ER) envoie les données nécessaires pour le fonctionnement aux calculateurs (BR1,BR2) prévus pour assumer le fonctionnement, pendant une phase d'équipement qui précède le fonctionnement, et à cet effet communique aux calculateurs également l'adresse de service (BADR), qui leur est respectivement affectée, et que les calculateurs (BR1,BR2) mémorisent tout d'abord temporairement l'adresse de service (BADR), qui leur est respectivement retransmise par le calculateur de coordination (ER) et délivrent cette adresse uniquement après l'apprentissage complet des calculateurs, pour le décodage des adresses.

5. Dispositif suivant la revendication 1, caractérisé par le fait que l'association de l'adresse de service d'un calculateur défaillant (BR1) à un calculateur de réserve (BRR) est rendue dépendante de la délivrance préalable de cette adresse de service par le calculateur défaillant (BR1) au calculateur de coordination (ER), ou de la séparation ou de la déconnexion du calculateur défaillant (BR1).

6. Dispositif suivant la revendication 5, caractérisé par le fait que les calculateurs du système à calculateurs multiples sont réalisés de manière à être sûrs du point de vue de la technique des signaux et se débranchent de façon sûre, du point de vue de la technique des signaux, dans le cas d'une panne.

7. Dispositif suivant la revendication 1, caractérisé par le fait que le calculateur de coordination (ER) communique avec les calculateurs de réserve (BRR), qui ne sont pas occupés par une adresse de service (BADR), au niveau de leur adresse de module (DADR).

8. Dispositif suivant la revendication 7, caractérisé par le fait que le calculateur de coordination (ER) envoie, pendant une phase d'apprentissage qui précède le fonctionnement, des données nécessaires pour le fonctionnement d'un calculateur quelconque assumant le fonctionnement, au calculateur de réserve (BRR), que n'est pas prévu tout d'abord pour assumer le fonctionnement.

9. Dispositif suivant la revendication 8, caractérisé par le fait qu'au moins un calculateur de réserve est associé de façon fixe à un calculateur assumant le fonctionnement et que le calculateur d'entrée envoie aux calculateurs de réserve les données du calculateur respectivement associé, qui assume le fonctionnement.

10. Dispositif suivant la revendication 1, caractérisé par le fait que les adresses de modules (DADR) et les adresses de service (BADR) sont représentées par des octets de même longueur et que les octets des adresses de modules possèdent, en une position binaire prédéterminée, un bit possédant une valeur et que les octets des adresses de service possèdent, en cet emplacement, un bit possédant l'autre valeur.

11. Dispositif suivant la revendication 1, caractérisé par le fait que l'exécution du trafic de données entre le calculateur de coordination (ER) et les autres calculateurs (BR1,BR2,BRR) du système de calculateurs y compris le calculateur de réserve est rendue dépendante de la transmission et de l'accusé de réception de télégrammes désignant l'adresse de module (DADR) du calculateur d'émission respectif (ER), et que la transmission de ces télégrammes s'effectue à l'adresse de module (DADR) du calculateur de réception respectif (BR1,BR2,BRR).

12. Dispositif suivant la revendication 4, 7, 8 ou 9, caractérisé par le fait que le calculateur de coordination (ER) transmet aux calculateurs (BR1,BR2,BRR) y compris le calculateur de réserve, des télégrammes de contrôle pour l'identification d'éventuelles réactions erronées de ces calculateurs.

13. Dispositif suivant la revendication 1 ou 10, caractérisé par le fait que le calculateur de coordination (ER) appelle, après une défaillance transitoire, les calculateurs (BR1,BR2) assumant le fonctionnement, par l'intermédiaire des adresses de service (BADR), que les calculateurs (BR1,BR2) assumant le fonctionnement accusent réception de cet appel en adressant une communication d'association contenant l'adresse de service (BADR), qui leur est respectivement associée, et leur adresse de module (DADR), et que le calculateur de coordination (ER) introduit les communications d'association dans la liste d'associations.
